# EUROPEAN PATENT APPLICATION

(11) **EP 4 759 725 A1**
(43) Date of publication of application: **17.06.2026**
(21) Application number: 25222609.7
(22) Date of filing: 11.12.2025
(51) Int. Cl.: B64F 5/30

(54) **WASH SYSTEMS FOR GAS TURBINE ENGINES**

(30) Priority: 13.12.2024 IN 202411098636; 03.07.2025 US 202519259010
(71) Applicant: General Electric Company, Cincinnati, Ohio 45215 (US)
(72) Inventor: YAMARTHI, David Raju, 560066 Bengaluru (IN); GANIGER, Ravindra Shankar, 560066 Bengaluru (IN); MATHEW, Paul, 560066 Bengaluru (IN); PETKAR, Kirti Arvind, 560066 Bengaluru (IN); RAMADURAI, Krishna, 560066 Bengaluru (IN); SWAMINATHAN, Srinivasan, 560066 Bengaluru (IN)
(74) Representative: Openshaw & Co.

(57) **Abstract**

A wash system (300A, 300B, 300C) for washing a gas turbine engine (10) having a compressor section (22, 24), a combustion section (26), and a turbine section (28, 30) includes a detergent reservoir (365) for storing a wash fluid (372), a foam wash module (315) in fluid communication with the detergent reservoir (365) for generating a flow of foamed wash fluid (376), a particulate reservoir (370) for storing solid particulates (380), and at least one supply line (378) fluidly coupled to the foam wash module (315) and the particulate reservoir (370) for supplying a mixture of the foamed wash fluid (376) and the solid particulates (380) to the gas turbine engine (10).

## Description

### CROSS-REFERENCE TO RELATED APPLIATION(S)

This application claims priority to Indian Provisional Application No. 202411098636 filed December 13, 2024, and to U.S. Application No. 19/259,010 filed July 3, 2025, which are incorporated herein by reference in their entirety.

### FIELD

The present disclosure relates to wash systems for gas turbine engines, and methods for operating the same.

### BACKGROUND

A gas turbine engine typically includes a fan and a turbomachine. The turbomachine generally includes an inlet, one or more compressors, a combustor, and at least one turbine. The compressors compress air which is channeled to the combustor where it is mixed with fuel. The mixture is then ignited for generating hot combustion gases. The combustion gases are channeled to the turbine(s) which extracts energy from the combustion gases for powering the compressor(s), as well as for producing useful work to propel an aircraft in flight. The turbomachine is mechanically coupled to the fan for driving the fan during operation.

During operation, a substantial amount of air is ingested by such gas turbine engines. Such air may contain foreign particles. While a majority of the foreign particles will follow a gas path through the engine and exit with the exhaust gases, at least a portion of these particles may stick to certain components within the gas turbine engine's gas path, potentially changing aerodynamic and/or thermal properties of the engine and reducing engine performance.

In order to remove such foreign particles from within the gas path of the gas turbine engine, a cleaning operation can be performed by directing water or other fluids towards an inlet of the gas turbine engine. However, such cleaning operations may require elongated soaking times.

Accordingly, wash systems for providing improved cleaning of a gas turbine engine would be useful. More particularly, wash systems that reduce overall cleaning time are desirable.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a cross-sectional view of a gas turbine engine in accordance with an exemplary aspect of the present disclosure.
FIG. 2 is a perspective view of a modular cart that may contain certain components of an exemplary wash system in accordance with an exemplary aspect of the present disclosure.
FIG. 3A is a schematic view of the exemplary wash system of FIG. 2 in accordance with an exemplary aspect of the present disclosure.
FIG. 3B is a schematic view of the exemplary wash system of FIG. 2 in accordance with an exemplary aspect of the present disclosure.
FIG. 3C is a schematic view of the exemplary wash system of FIG. 2 in accordance with an exemplary aspect of the present disclosure.
FIG. 4 is a detailed view of a cleaning mixture of the exemplary wash system of FIGS. 3A-3B in accordance with an exemplary aspect of the present disclosure.
FIG. 5 provides a method of cleaning a gas turbine engine in accordance with an exemplary aspect of the present disclosure.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The singular forms "a," "an," and "the" include plural references unless the context clearly dictates otherwise.

The term "at least one of" in the context of, e.g., "at least one of A, B, and C" refers to only A, only B, only C, or any combination of A, B, and C.

The term "turbomachine" refers to a machine including one or more compressors, a heat generating section (e.g., a combustion section), and one or more turbines that together generate a torque output.

The term "gas turbine engine" refers to an engine having a turbomachine as all or a portion of its power source. Example gas turbine engines include turbofan engines, turboprop engines, turbojet engines, turboshaft engines, etc., as well as hybrid-electric versions of one or more of these engines.

The term "combustion section" refers to any heat addition system for a turbomachine. For example, the term combustion section may refer to a section including one or more of a deflagrative combustion assembly, a rotating detonation combustion assembly, a pulse detonation combustion assembly, or other appropriate heat addition assembly. In certain example embodiments, the combustion section may include an annular combustor, a can combustor, a cannular combustor, a trapped vortex combustor (TVC), or other appropriate combustion system, or combinations thereof.

The terms "low" and "high," or their respective comparative degrees (e.g., -er, where applicable), when used with a compressor, a turbine, a shaft, or spool components, etc. each refer to relative speeds within an engine unless otherwise specified. For example, a "low turbine" or "low speed turbine" defines a component configured to operate at a rotational speed, such as a maximum allowable rotational speed, lower than a "high turbine" or "high speed turbine" of the engine.

The terms "forward" and "aft" refer to relative positions within a gas turbine engine or vehicle, and are based on a normal operational attitude of the gas turbine engine or vehicle. More particularly, forward and aft are used herein with reference to a direction of travel of the vehicle and a direction of propulsive thrust of the gas turbine engine.

The terms "upstream" and "downstream" refer to the relative direction with respect to fluid flow in a fluid pathway. For example, "upstream" refers to the direction from which the fluid flows, and "downstream" refers to the direction to which the fluid flows.

As used herein, the terms "axial" and "axially" refer to directions and orientations that extend substantially parallel to a centerline of the gas turbine engine. Moreover, the terms "radial" and "radially" refer to directions and orientations that extend substantially perpendicular to the centerline of the gas turbine engine. In addition, as used herein, the terms "circumferential" and "circumferentially" refer to directions and orientations that extend arcuately about the centerline of the gas turbine engine.

As used herein, a "bypass ratio" of a turbine engine is a ratio of bypass air through a bypass of the turbine engine to core air through a core inlet of a turbomachine of the turbine engine. For example, the bypass ratio is a ratio of bypass air entering the bypass airflow passage to core air entering the turbomachine.

The terms "coupled," "fixed," "attached to," and the like refer to both direct coupling, fixing, or attaching, as well as indirect coupling, fixing, or attaching through one or more intermediate components or features, unless otherwise specified herein.

As used herein, the terms "first," "second," and "third" may be used interchangeably to distinguish one component from another and are not intended to signify location or importance of the individual components.

For purposes of the description hereinafter, the terms "upper," "lower," "right," "left," "vertical," "horizontal," "top," "bottom," "lateral," "longitudinal," and derivatives thereof shall relate to the embodiments as they are oriented in the drawing figures. However, it is to be understood that the embodiments may assume various alternative variations, except where expressly specified to the contrary. It is also to be understood that the specific devices illustrated in the attached drawings, and described in the following specification, are simply exemplary embodiments of the disclosure. Hence, specific dimensions and other physical characteristics related to the embodiments disclosed herein are not to be considered as limiting.

The present disclosure is generally related to wash systems for removing foreign particles from gas turbine engines. Traditional wash systems require long soaking times. In an example embodiment, the present disclosure is directed to introducing additives, such as solid detergent particulates, along with the cleaning fluid to improve cleaning and reduce cleaning time. For example, the solid detergent particulates may weaken foreign object adherence to components of the gas turbine engine. Moreover, reducing cleaning time results reduces time on ground, which is desirable for commercial aircraft.

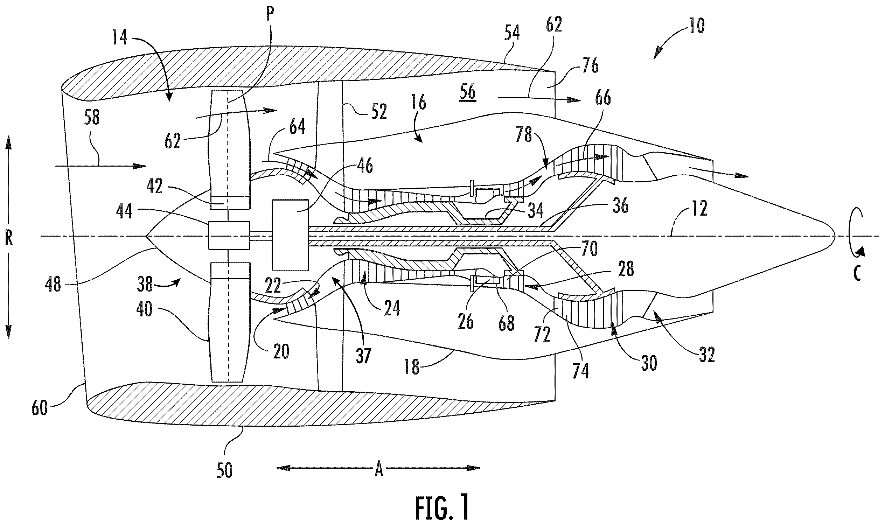

Referring now to the drawings, FIG. 1 is a schematic cross-sectional view of a gas turbine engine 10 in accordance with an exemplary embodiment of the present disclosure. More particularly, for the embodiment of FIG. 1, the gas turbine engine 10 is a high-bypass turbofan jet engine, sometimes also referred to as a "turbofan engine." As shown in FIG. 1, the gas turbine engine 10 defines an axial direction A (extending parallel to a longitudinal centerline 12 provided for reference), a radial direction R, and a circumferential direction C extending about the longitudinal centerline 12. In general, the gas turbine engine 10 includes a fan section 14 and a turbomachine 16 disposed downstream from the fan section 14.

The exemplary turbomachine 16 depicted generally includes a substantially tubular outer casing 18 that defines an annular inlet 20. The outer casing 18 encases, in serial flow relationship, a compressor section including a booster or low pressure (LP) compressor 22 and a high pressure (HP) compressor 24; a combustion section 26; a turbine section including a high pressure (HP) turbine 28 and a low pressure (LP) turbine 30; and a jet exhaust nozzle section 32. A high pressure (HP) shaft 34 (which may additionally or alternatively be a spool) drivingly connects the HP turbine 28 to the HP compressor 24. A low pressure (LP) shaft 36 (which may additionally or alternatively be a spool) drivingly connects the LP turbine 30 to the LP compressor 22. The compressor section, combustion section 26, turbine section, and jet exhaust nozzle section 32 together define a core gas flowpath 37.

For the embodiment depicted, the fan section 14 includes a fan 38 having a plurality of fan blades 40 coupled to a disk 42 in a spaced apart manner. As depicted, the fan blades 40 extend outwardly from disk 42 generally along the radial direction R. Each fan blade 40 is rotatable relative to the disk 42 about a pitch axis P by virtue of the fan blades 40 being operatively coupled to a suitable pitch change mechanism 44 configured to collectively vary the pitch of the fan blades 40, e.g., in unison. The gas turbine engine 10 further includes a power gear box 46, and the fan blades 40, disk 42, and pitch change mechanism 44 are rotatable together about the longitudinal centerline 12 by LP shaft 36 across the power gear box 46. The power gear box 46 includes a plurality of gears for adjusting a rotational speed of the fan 38 relative to a rotational speed of the LP shaft 36, such that the fan 38 may rotate at a more efficient fan speed.

Referring still to the exemplary embodiment of FIG. 1, the disk 42 is covered by rotatable front hub 48 of the fan section 14 (sometimes also referred to as a "spinner"). The front hub 48 aerodynamically contoured to promote an airflow through the plurality of fan blades 40.

Additionally, the exemplary fan section 14 includes an annular fan casing or outer nacelle 50 that circumferentially surrounds the fan 38 and/or at least a portion of the turbomachine 16. It should be appreciated that the nacelle 50 is supported relative to the turbomachine 16 by a plurality of circumferentially-spaced outlet guide vanes 52 in the embodiment depicted. Moreover, a downstream section 54 of the nacelle 50 extends over an outer portion of the turbomachine 16 so as to define a bypass airflow passage 56 therebetween.

During operation of the gas turbine engine 10, a volume of air 58 enters the gas turbine engine 10 through an associated inlet 60 of the nacelle 50 and fan section 14. As the volume of air 58 passes across the fan blades 40, a first portion of air 62 is directed or routed into the bypass airflow passage 56 and a second portion of air 64 as indicated by arrow 64 is directed or routed into the core gas flowpath 37, or more specifically into the LP compressor 22. The ratio between the first portion of air 62 and the second portion of air 64 is commonly known as a bypass ratio. A pressure of the second portion of air 64 is then increased as it is routed through the HP compressor 24 and into the combustion section 26, where it is mixed with fuel and burned to provide combustion gases 66.

The combustion gases 66 are routed through the HP turbine 28 where a portion of thermal and/or kinetic energy from the combustion gases 66 is extracted via sequential stages of HP turbine stator vanes 68 that are coupled to the outer casing 18 and HP turbine rotor blades 70 that are coupled to the HP shaft 34, thus causing the HP shaft 34 to rotate, thereby supporting operation of the HP compressor 24. The combustion gases 66 are then routed through the LP turbine 30 where a second portion of thermal and kinetic energy is extracted from the combustion gases 66 via sequential stages of LP turbine stator vanes 72 that are coupled to the outer casing 18 and LP turbine rotor blades 74 that are coupled to the LP shaft 36, thus causing the LP shaft 36 to rotate, thereby supporting operation of the LP compressor 22 and/or rotation of the fan 38.

The combustion gases 66 are subsequently routed through the jet exhaust nozzle section 32 of the turbomachine 16 to provide propulsive thrust. Simultaneously, the pressure of the first portion of air 62 is substantially increased as the first portion of air 62 is routed through the bypass airflow passage 56 before it is exhausted from a fan nozzle exhaust section 76 of the gas turbine engine 10, also providing propulsive thrust. The HP turbine 28, the LP turbine 30, and the jet exhaust nozzle section 32 at least partially define a hot gas path 78 for routing the combustion gases 66 through the turbomachine 16.

It should be appreciated, however, that the exemplary gas turbine engine 10 depicted in FIG. 1 is by way of example only, and that in other exemplary embodiments, the gas turbine engine 10 may have any other suitable configuration. For example, although the gas turbine engine 10 depicted is configured as a ducted gas turbine engine (i.e., including the outer nacelle 50), in other embodiments, the gas turbine engine 10 may be an unducted gas turbine engine (such that the fan 38 is an unducted fan, and the outlet guide vanes 52 are cantilevered from the outer casing 18). Additionally, or alternatively, although the gas turbine engine 10 depicted is configured as a geared gas turbine engine (i.e., including the power gear box 46) and a variable pitch gas turbine engine (i.e., including a fan 38 configured as a variable pitch fan), in other embodiments, the gas turbine engine 10 may additionally or alternatively be configured as a direct drive gas turbine engine (such that the LP shaft 36 rotates at the same speed as the fan 38), as a fixed pitch gas turbine engine (such that the fan 38 includes fan blades 40 that are not rotatable about a pitch axis P), or both. It should also be appreciated, that in still other exemplary embodiments, aspects of the present disclosure may be incorporated into any other suitable gas turbine engine. For example, in other exemplary embodiments, aspects of the present disclosure may (as appropriate) be incorporated into, e.g., a turboprop gas turbine engine, a turboshaft gas turbine engine, or a turbojet gas turbine engine.

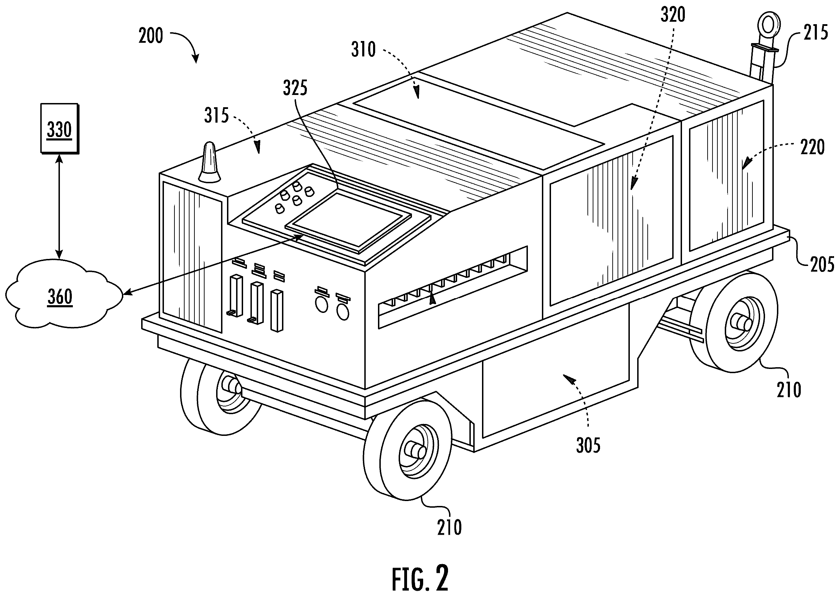

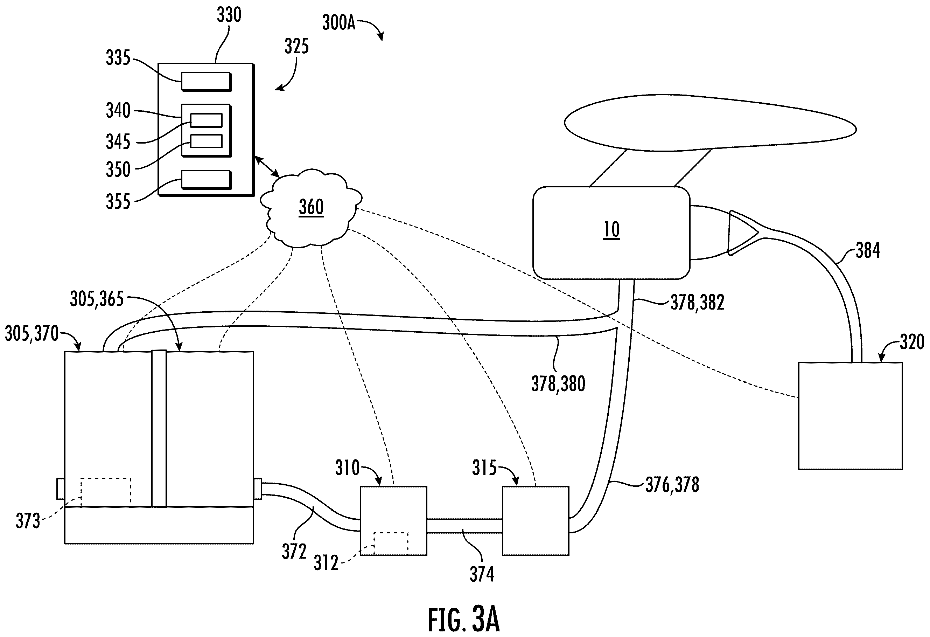

FIG. 2 is a perspective view of a modular cart 200 that may contain certain components of an exemplary wash system in accordance with an exemplary aspect of the present disclosure. As described in detail below, the modular cart 200 may be configured for housing some or all components of a wash system (which will be described in more detail below with reference to FIGS. 3A-3C). The wash system is generally configured for washing, rinsing, or otherwise cleaning a gas turbine engine, such as the gas turbine engine 10 (FIG. 1). Additionally, or alternatively, however, the wash system may be utilized with any other suitable gas turbine engine, such as a turbofan engine, turboprop engine, a turboshaft engine, turbojet engine, etc.

According to the exemplary illustrated embodiment, the wash system is configured as a modular system that is housed at least in part on or within the modular cart 200. As illustrated, the modular cart 200 includes a support frame 205 mounted on a plurality of wheels 210 to improve the mobility of the cart and facilitate quick and easy cleaning of gas turbine engine 10. In addition, the modular cart 200 may include a pivoting tug bar 215 such that the modular cart 200 may be towed by a vehicle to a desired location proximate to the gas turbine engine 10. Moreover, the modular cart 200 can contain various storage compartments 220 for storing all equipment necessary for cleaning the gas turbine engine 10 and other features for facilitating the quick and easy cleaning of the gas turbine engine 10.

FIG. 3A is a schematic view of an exemplary wash system 300A (also referred to as a wash assembly) in accordance with an exemplary aspect of the present disclosure. More specifically, FIG. 3A provides a schematic view of the wash system 300A and its various cleaning modules in accordance with an exemplary embodiment of the present disclosure. For example, the wash system 300A generally includes one or more tank modules 305, a wash module 310, a foam wash module 315, and a collection module 320. In general, the tank modules 305 may store wash fluid and other cleaning materials, the wash module 310 may receive and pressurize the wash fluid, the foam wash module 315 may process the wash fluid to form a foamed wash fluid, and the collection module 320 may collect and/or recycle waste wash fluid and foreign materials.

Each of the various modules are, for the embodiment depicted, operably connected to a control system 325. The control system 325 can include one or more computing device(s) 330. The computing device(s) 330 can include one or more processor(s) 335 and one or more memory device(s) 340. The one or more processor(s) 335 can include any suitable processing device, such as a microprocessor, microcontroller, integrated circuit, logic device, and/or other suitable processing device. The one or more memory device(s) 340 can include one or more computer-readable media, including, but not limited to, non-transitory computer-readable media, RAM, ROM, hard drives, flash drives, and/or other memory devices.

The one or more memory device(s) 340 can store information accessible by the one or more processor(s) 335, including computer-readable instructions 345 that can be executed by the one or more processor(s) 335. The instructions 345 can be any set of instructions that when executed by the one or more processor(s) 335, cause the one or more processor(s) 335 to perform operations. In some embodiments, the instructions 345 can be executed by the one or more processor(s) 335 to cause the one or more processor(s) 335 to perform operations, such as any of the operations and functions for which the control system 325 and/or the computing device(s) 330 are configured, the operations for operating the wash system 300A (e.g., method 500), as described herein, and/or any other operations or functions of the one or more computing device(s) 330. The instructions 345 can be software written in any suitable programming language or can be implemented in hardware. Additionally, and/or alternatively, the instructions 345 can be executed in logically and/or virtually separate threads on the one or more processor(s) 335. The one or more memory device(s) 340 can further store data 350 that can be accessed by the one or more processor(s) 335. For example, the data 350 can include data indicative of power flows, data indicative of engine/ aircraft operating conditions, and/or any other data and/or information described herein.

The computing device(s) 330 can also include a communications interface 355 used to communicate, for example, with the other components of the wash system 300A. The communications interface 355 can include any suitable components for interfacing with one or more network(s), including for example, transmitters, receivers, ports, controllers, antennas, and/or other suitable components. One or more devices can be configured to receive one or more commands from the computing device(s) 330 or provide one or more commands to the computing device(s) 330.

Moreover, the control system 325 may also be in communication (e.g., via the communications interface 355) with the various modules 305, 310, 315, 320, described below, and may selectively operate the wash system 300A in response to user input and feedback from these modules 305, 310, 315, 320. More specifically, for the embodiment depicted, the control system 325 is configured to communicate through a wireless communication network 360 through communications interface 355, such that the control system 325 may send or receive information and/or commands to or from the various modules 305, 310, 315, 320 of the exemplary wash system 300A wirelessly. It should also be appreciated, however, that in other embodiments, the control system 325 may additionally, or alternatively, use a wired communication bus to communicate with the various modules 305, 310, 315, 320.

The technology discussed herein makes reference to computer-based systems and actions taken by and information sent to and from computer-based systems. One of ordinary skill in the art will recognize that the inherent flexibility of computer-based systems allows for a great variety of possible configurations, combinations, and divisions of tasks and functionality between and among components. For instance, processes discussed herein can be implemented using a single computing device or multiple computing devices working in combination. Databases, memory, instructions, and applications can be implemented on a single system or distributed across multiple systems. Distributed components can operate sequentially or in parallel.

It should be appreciated that the modular cart 200 and the wash system 300A as described herein may allow for a more versatile cleaning system for a gas turbine engine, such as the gas turbine engine 10. For example, utilizing tank modules that are interchangeable may allow for extended washing operations, without having to refill a tank and wait for the wash fluid, if applicable, to heat up to a desired temperature. Instead, once a given tank module has been utilized or depleted by the wash system 300A, a second tank module may be connected to the wash system 300A to allow for the washing operations to continue with minimal interruption. Similarly, utilizing a wash module that is interchangeable may allow for multiple wash operations to be completed on a given gas turbine engine without requiring two completely separate wash systems. In addition, according to exemplary embodiments of the present subject matter, a power module could be configured for providing compressed air and/or electrical power, e.g., when the wash system 300A is used in a location where such facilities are inconvenient or unavailable.

It should be appreciated, that as used herein the term "fluid," "wash fluid," "wash liquid," and the like may refer to any suitable fluid for performing washing operations and/or rinsing the gas turbine engine 10. Such wash fluid is typically made up of water that may include other additives such as detergent, soap, or other treatments. For example, the wash fluid may refer to water, or a combination of water and one or more additives such as detergent, soap, corrosion inhibitors, surfactants, bis-tris, and other additives. Moreover, the wash system 300A is not limited to utilizing water or any particular detergent as a wash fluid. Instead, the wash system 300A may utilize any suitable wash liquid for performing desired washing operations of the gas turbine engine.

Still referring to FIG. 3A, the tank module 305 may include a plurality of tanks for storing a wash fluid, particulates, or other cleaning materials. For example, the tank module 305 may include a first tank, such as a detergent reservoir 365, and a second tank, such as a particulate reservoir 370. The detergent reservoir 365 contains a wash fluid, or rather a wash liquid. The particulate reservoir 370 contains solid particulates. For example, the solid particulates may be at least partially formed of a detergent or other treatments for washing the gas turbine engine 10.

The detergent reservoir 365 is fluidly coupled to a wash module 310. For example, the detergent reservoir 365 may be in fluid communication with the wash module 310 via one or more fluid conduits or tubing. The wash module 310 is configured to receive a flow of the wash fluid 372 from the detergent reservoir 365. For example, the wash module 310 may include a pump 312 for receiving the flow of wash fluid 372 and generating a pressurized flow of the wash fluid 374. The control system 325 may be operably coupled to the detergent reservoir 365 and the wash module 310, and more particularly to the pump 312 of the wash module 310, for controlling the flow of wash fluid 372 from the detergent reservoir 365 to the wash module 310.

In some example embodiments, the wash module 310 is in fluid communication with the foam wash module 315. For example, the wash module 310 may be in fluid communication with the foam wash module 315 via one or more fluid conduits or tubing. However, it should be understood that in some embodiments, the wash module 310 and the foam wash module 315 may be integrated into a single, integral module. The foam wash module 315 is configured to receive the flow of wash fluid, such as the pressurized flow of the wash fluid 374, from the wash module 310 and generate a foam wash fluid. For example, the foam wash module 315 includes a foam generating device, or foam generator, for generating a flow of the foamed wash fluid 376.

The foam generating device of the foam wash module 315 may generally be configured for mixing the flow of wash fluid 372 (or the pressurized flow of the wash fluid 374) with a stream of air to aerate the wash fluid and generate the flow of the foamed wash fluid 376. In this regard, for example, the flow of foamed wash fluid 376 may include wash fluid with a desired foam density, or a desired ratio of air to fluid. The foam may be characterized according to different properties as well. For example, the foam generating device may be configured for achieving a specific bubble distribution, foam viscosity, etc. The foam characteristics may be manipulated by adjusting a temperature or a flow rate of either the flow of wash fluid or the stream of air into the foam generating device.

The flow of the foamed wash fluid 376 is supplied from the foam wash module 315 to the gas turbine engine 10 for cleaning by a supply assembly, such as at least one supply line 378. The at least one supply line 378 may include one or more conduits or tubing. Moreover, the control system 325 may be operably coupled to the foam wash module 315 for controlling the flow of the foamed wash fluid 376 to the gas turbine engine 10 via the at least one supply line 378.

In other example embodiments, one or both of the wash module 310 and the foam wash module 315 may be omitted. For example, the wash fluid may be supplied from the detergent reservoir 365 directly to the gas turbine engine 10 via the at least one supply line 378. In such example embodiments, the wash fluid may include water, such as water without detergents or additional additives.

Additionally, the particulate reservoir 370 is in communication with the gas turbine engine 10 via the at least one supply line 378. More particularly, a flow of solid particulates 380 is supplied from the particulate reservoir 370 to the at least one supply line 378 to be mixed with the flow of foamed wash fluid 376 upstream of the gas turbine engine 10 and generate a cleaning mixture. For example, the flow of solid particulates 380 and the flow of the foamed wash fluid 376 may combine within the at least one supply line 378 downstream of the foam wash module 315 and the particulate reservoir 370 to generate a flow of the cleaning mixture 382. In at least one example embodiment, a particulate pump 373 is in fluid communication with the particulate reservoir 370 for generating the flow of solid particulates 380. The particulate pump 373 may be coupled to or disposed within the particulate reservoir 370.

Moreover, the particulate reservoir 370 may include a particulate delivery device for supplying the flow of solid particulates 380 from the particulate reservoir 370 to the at least one supply line 378. The particulate delivery device may be disposed within or in fluid communication with the particulate reservoir 370. In at least one example embodiment, the particulate delivery device provides a high velocity jet of compressed air or inert gas, which entrains the solid particulates and flows through the at least one supply line 378. In additional example embodiments, the particulate delivery device may include a valve-controlled gravity feed system configured to inject a desired quantity of the solid particulates 380 into the at least one supply line 378.

In operation, the flow of the cleaning mixture 382 is supplied to the gas turbine engine 10 via the at least one supply line 378 and deposited on surfaces of one or more components of the gas turbine engine 10. For example, the flow of the cleaning mixture 382 may be supplied to the compressor section (including the LP compressor 22 and the HP compressor 24), the combustion section 26, the turbine section (including the HP turbine 28 and the LP turbine 30), or a combination thereof. Moreover, the one or more components of the gas turbine engine 10 may be rotated to ensure that the cleaning mixture is dispersed on a larger surface area of the gas turbine engine 10. For example, the one or more components of the gas turbine engine 10 may be rotated by an electrical motor or a hand crank. More specifically, the control system 325 may control rotation of the one or more components of the gas turbine engine 10. In at least one example embodiment, the one or more components of the gas turbine engine 10 may be rotated at a rotational speed greater than or equal to 50 rotations per minute (RPM) and less than or equal to 1,000 RPM. For example, the one or more components of the gas turbine engine 10 may be rotated at a rotational speed greater than or equal to 100 rotations per minute (RPM) and less than or equal to 500 RPM. More particularly, the one or more components of the gas turbine engine 10 may be rotated at a rotational speed greater than or equal to 150 rotations per minute (RPM) and less than or equal to 300 RPM. However, it should be understood that additional rotational speeds are possible and within the scope of the present disclosure.

After washing the gas turbine engine 10, used washing fluid, such as used cleaning mixture, may be discharged from the gas turbine engine 10 to the collection module 320. The collection module 320 may also receive dirt, debris, and other foreign material resulting from cleaning the gas turbine engine 10. As shown in FIG. 3A, the dirt, dust, other foreign materials, and any excess cleaning material may be supplied to the collection module 320 via a collection module supply line 384. The used cleaning mixture and foreign materials may then be disposed of or recycled from the collection module 320.

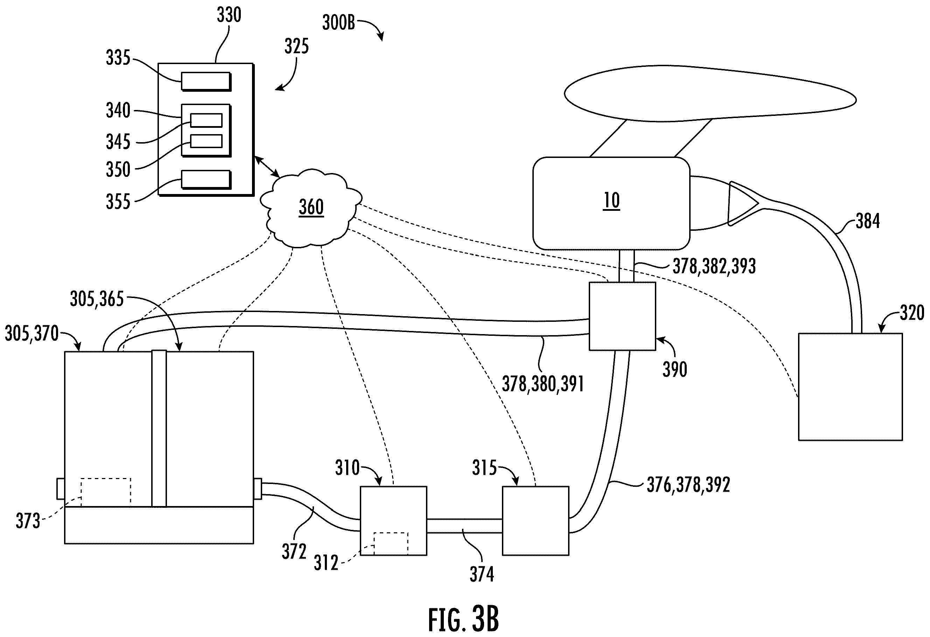

FIG. 3B is a schematic view of an exemplary wash system 300B in accordance with an exemplary aspect of the present disclosure. The wash system 300B may be similar or analogous to the wash system 300A discussed with respect to FIG. 3A. For example, the wash system 300B shown in FIG. 3B generally includes the one or more tank modules 305, the wash module 310, the foam wash module 315, the collection module 320, and the control system 325.

With respect to FIG. 3B, the wash system 300B additionally includes a mixing module, such as a mixing chamber 390. The mixing chamber 390 is configured to receive the flow of solid particulates 380 from the particulate reservoir 370 and the flow of the foamed wash fluid 376 from the foam wash module 315. Accordingly, the mixing chamber 390 is configured to mix the flow of the foamed wash fluid 376 and the flow of solid particulates 380 to form the cleaning mixture. In at least one example embodiment, a sensor may be disposed within the mixing chamber 390 and communicably coupled to the control system 325 for determining a ratio of the solid particulates 380 to the foamed wash fluid 377.

As shown in FIG. 3B, the at least one supply line 378 may include a first supply line 391 for supplying the flow of solid particulates 380 to the mixing chamber 390 and a second supply line 392 for supplying the flow of foamed wash fluid 376 to the mixing chamber 390. After mixing, the flow of the cleaning mixture 382 is supplied to the gas turbine engine 10 from the mixing chamber 390. For example, the at least one supply line 378 includes a third supply line 393 for supplying the flow of the cleaning mixture 382 to the gas turbine engine 10 from the mixing chamber 390.

Additionally, the control system 325 may be operably coupled to the particulate reservoir 370 and the mixing chamber 390 for controlling a flow of the solid particles from the particulate reservoir 370 to the mixing chamber 390 the flow of the cleaning mixture 382 from the mixing chamber 390 to the gas turbine engine 10. For example, the control system 325 may control an amount of the solid particles to be mixed with the foamed wash fluid such that the mixing chamber 390 mixes a desired quantity or amount of the solid particles with the foamed wash fluid. For example, a ratio of the solid particulates to the foamed wash fluid may be greater than or equal to 0.1% and less than or equal to 5% by weight. More specifically, the ratio of the solid particulates to the foamed wash fluid may be greater than or equal to 0.5% and less than or equal to 2% by weight. Additionally, the ratio of the solid particulates to the foamed wash fluid may be 1.5% by weight in some example embodiments. However, it should be understood that other ratios of solid particulates to the foamed wash fluid are possible and within the scope of the present disclosure.

Moreover, the mixing chamber 390 may include a sensor for determining the ratio of the solid particulates to the foamed wash fluid. The sensor may be disposed within the mixing chamber 390 or in fluid communication with the mixing chamber 390. The sensor is communicatively coupled to the control system 325 such that the control system 325 may control the amount of the solid particles to be mixed with the foamed wash fluid based on the ratio of the solid particulates to the foamed wash fluid measured by the sensor within the mixing chamber 390.

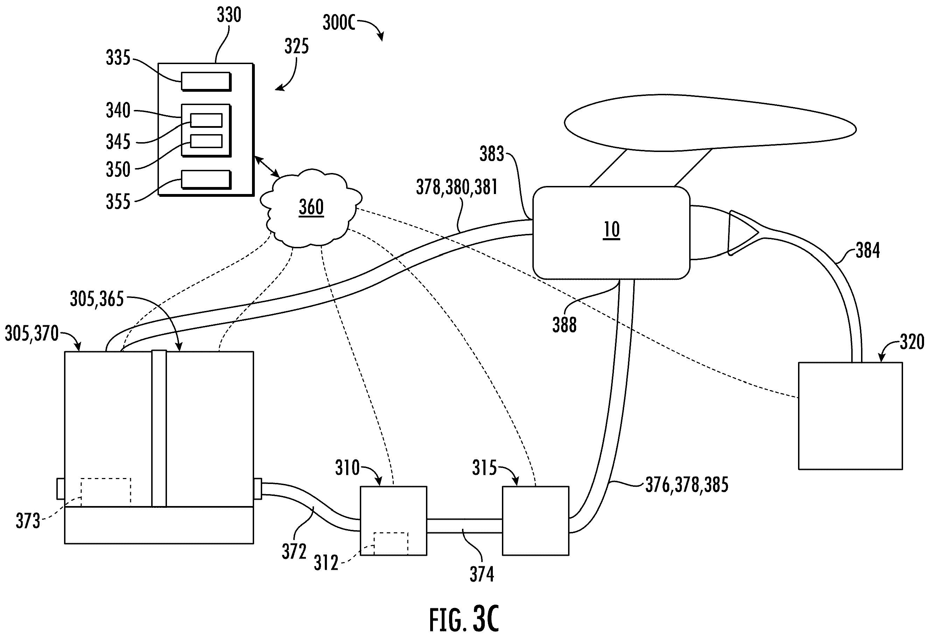

FIG. 3C is a schematic view of an exemplary wash system 300C in accordance with an exemplary aspect of the present disclosure. The wash system 300C may be similar or analogous to the exemplary wash systems 300A, 300B discussed with respect to FIGS. 3A-3B. For example, the wash system 300C shown in FIG. 3C generally includes the one or more tank modules 305, the wash module 310, the foam wash module 315, the collection module 320, and the control system 325.

With respect to FIG. 3C, the at least one supply line 378 of the wash system 300C may include one or more particulate supply lines 381 for supplying the flow of solid particulates 380 to the gas turbine engine 10 and one or more fluid supply lines 385 for supplying the flow of foamed wash fluid 376 to the gas turbine engine 10. As shown in FIG. 3C, the one or more particulate supply lines 381 may be coupled to one or more first inlets 383 of the gas turbine engine 10 and the one or more fluid supply lines 385 may be coupled to one or more second inlets 388 of the gas turbine engine 10 separate from the one or more first inlets 383. In other example embodiments, the one or more particulate supply lines 381 and the one or more fluid supply lines 385 may be coupled to one or more of the same inlets of the gas turbine engine 10.

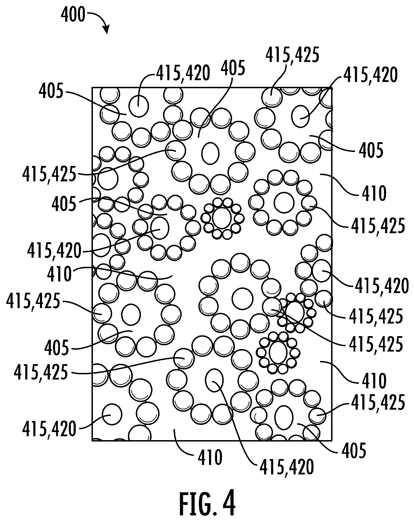

FIG. 4 is a detailed view of a foamed cleaning mixture 400 of the exemplary wash system of FIGS. 3A-3B in accordance with an exemplary aspect of the present disclosure.

The foamed cleaning mixture 400 includes the foamed wash fluid provided from the detergent reservoir 365, the wash module 310, and the foam wash module 315 and the solid particulates provided from the particulate reservoir 370. The foamed cleaning mixture 400 includes a plurality of gas bubbles 405 surrounded by a liquid wash fluid 410. Each of the solid particulates from the detergent reservoir 365, such as each of a plurality of solid particulates 415, may include a first plurality of solid particles 420 and a second plurality of solid particles 425. The plurality of solid particulates 415 may include a detergent. For example, the plurality of solid particulates 415 may include anionic detergents, nonionic detergents, solid solution polyisobutylene amine (PIBA), or a combination thereof. Moreover, the second plurality of solid particles 425 may be different from the first plurality of solid particles 420. For example, as shown in FIG. 4, the second plurality of solid particles 425 of each of the plurality of solid particles 415 surround a periphery of each of the first plurality of solid particles 420. The first plurality of solid particles 420 may include detergent, dry ice, ice crystal, or a combination thereof and the second plurality of solid particles 425 may include hydrophilic binders, such as coal fly ash particles. The hydrophilic binders may be used in combination with the detergent, such as while a liquid is distilled or deionized, or with water. Additionally, or alternatively, the plurality of solid particulates 415 may include an aerosol including the detergent and any additives.

The detergent of the plurality of solid particulates 415 may be sized and shaped such that a surface area of each of plurality of solid particulates 415 is increased, which increases abrasiveness and cleaning effectiveness of each of plurality of solid particulates 415. Additionally, or alternatively, the detergent may be compacted to remove pores, which delays dissolution of the detergent such that abrasive action and cleaning may be prolonged.

Moreover, the plurality of solid particulates 415 may include gelatin or pectin based hydrogels to enable slow release of the plurality of solid particulates 415 during engine wash. In at least one example embodiment, the hydrogels may release the plurality of solid particulates 415 based on temperature activation during foam wash.

In at least one example embodiment, the foamed cleaning mixture 400 is an aerosol. For example, as shown in FIG. 4, the second plurality of solid particles 425 surround the first plurality of solid particles 420. More particularly, at least one of the first plurality of solid particles 420 are disposed in each of the plurality of gas bubbles 405. The second plurality of solid particles 425 surround the plurality of gas bubbles 405 and are configured to stabilize the foamed cleaning mixture 400.

The plurality of solid particulates 415 are configured to abrasively clean surfaces of one or more components of the gas turbine engine 10. For example, the first plurality of solid particles 420 and the second plurality of solid particles 425 may release energy upon impact with surfaces for removal of debris and foreign materials. Moreover, the first plurality of solid particles 420 and the second plurality of solid particles 425 may have rugged shapes and textures suitable for abrasively cleaning the one or more components of the gas turbine engine 10. Additionally, the plurality of solid particulates 415 may dissolve or disintegrate to finer particles, leaving behind layer of the foamed wash fluid for further cleaning. Accordingly, the foamed cleaning mixture 400 may reduce an amount of time required for cleaning the gas turbine engine 10 by combining the abrasive cleaning of the plurality of solid particulates 415 with the cleaning provided by the foamed wash fluid including the detergent.

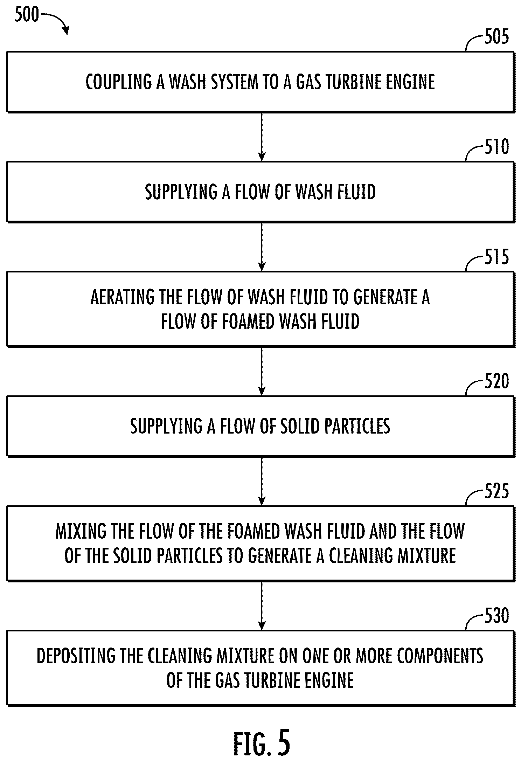

FIG. 5 provides a method 500 of cleaning a gas turbine engine in accordance with an exemplary aspect of the present disclosure. More specifically, the method 500 of cleaning the gas turbine engine may include cleaning the gas turbine engine 10 with the exemplary wash systems 300A, 300B, 300C discussed with respect to FIGS. 3A-3B.

In at least one example embodiment, the method 500 includes coupling a wash system to a gas turbine engine at 505, supplying a flow of wash fluid at 510, aerating the flow of wash fluid to generate a flow of foamed wash fluid at 515, supplying a flow of solid particles at 520, mixing the flow of the foamed wash fluid and the flow of the solid particles to generate a cleaning mixture at 525, and depositing the cleaning mixture on one or more components of the gas turbine engine at 530.

Coupling a wash system to a gas turbine engine at 505 may include fluidly coupling the wash system 300A, 300B to at least one inlet of the gas turbine engine 10 via the at least one supply line 378. Moreover, the modular cart 200 discussed with respect to FIG. 2 may be positioned in proximity to the gas turbine engine 10 for fluidly coupling the at least one supply line 378 of the wash system 300A, 300B to the at least one inlet of the gas turbine engine 10.

Supplying a flow of wash fluid at 510 may include supplying the wash fluid from the detergent reservoir 365 to the wash module 310 and the foam wash module 315. Aerating the flow of wash fluid to generate a flow of foamed wash fluid at 515 may include generating the foamed wash fluid using the foam generating device of the foam wash module 315, as discussed above with respect to FIG. 3A.

Supplying the flow of solid particles at 520 includes supplying the flow of solid particulates 380 from the particulate reservoir 370. It should be understood that supplying the flow of solid particles at 520 may be performed simultaneously with one or both of the steps of supplying the flow of wash fluid at 510 and aerating the flow of wash fluid to generate the flow of foamed wash fluid at 515.

Moreover, mixing the flow of the foamed wash fluid and the flow of the solid particles to generate a cleaning mixture 530 includes combining the flow of the solid particulates 380 and the flow of foamed wash fluid 376 to form the flow of cleaning mixture 382. For example, the flow of the solid particulates 380 and the flow of foamed wash fluid 376 may be combined within at least one supply line 378, as discussed with respect to FIG. 3A. Additionally, or alternatively, the flow of the solid particulates 380 and the flow of foamed wash fluid 376 may be combined within the mixing chamber 390, as discussed with respect to FIG. 3B. In additional example embodiments, the flow of the solid particulates 380 and the flow of foamed wash fluid 376 may be combined within the gas turbine engine 10, as shown and discussed with respect to FIG. 3C.

Depositing the cleaning mixture on one or more components of the gas turbine engine 10 at 530 includes supplying the flow of cleaning mixture 382 to the gas turbine engine 10 such that the cleaning mixture is deposited on surfaces of one or more components of the gas turbine engine 10. For example, the cleaning mixture may be deposited on surfaces of the compressor section (including the LP compressor 22 and the HP compressor 24), the combustion section 26, the turbine section (including the HP turbine 28 and the LP turbine 30), or a combination thereof.

The cleaning mixture is configured to break up and remove dirt, debris, and other foreign materials present within the gas turbine engine. The foamed cleaning material may wet or soak (e.g., wash, scrub) the gas turbine engine 10 to facilitate removal of dirt, debris, and foreign materials disposed in the gas turbine engine 10. For example, the foreign materials may include pollutants (e.g., sulfate, nitrates, etc.), evaporate deposits (e.g., halite, carbonates, etc.), and dust (e.g., aluminosilicate clays), and the foamed cleaning material may include a particular composition suitable for removal of the pollutants, evaporate deposits, and/or dust. Additionally, the solid particles of the foamed cleaning mixture may abrasively clean surfaces of the gas turbine engine 10, as discussed above with respect to FIG. 4, to dislodge the dirt, debris, and foreign materials.

In at least one example embodiment, the method 500 may further include rotating the one or more components of the gas turbine engine 10. Rotating the one or more components transmits kinetic energy to the solid particulates for abrasively cleaning surfaces of the one or more components of the gas turbine engine 10. Such rotation may also ensure that the foamed cleaning mixture reaches a larger surface of the one or more components of the gas turbine engine such that the foamed cleaning material soaks the dirt, debris, and foreign materials for a desired period of time and with a desired effectiveness. Accordingly, such rotation may further improve effectiveness of the cleaning operation.

After cleaning, the method 500 may further include discharging the used cleaning mixture from the gas turbine engine 10 along within any foreign particles to the collection module 320, as discussed above with respect to FIGS. 3A-4.

Further aspects are provided by the subject matter of the following clauses:

A wash system for washing a gas turbine engine, the gas turbine engine comprising a compressor section, a combustion section, and a turbine section, the wash system comprising: a detergent reservoir for storing a wash fluid; a foam wash module in fluid communication with the detergent reservoir to generate a flow of foamed wash fluid; a particulate reservoir for storing solid particulates; and at least one supply line fluidly coupled to the foam wash module and the particulate reservoir to supply a mixture of the foamed wash fluid and the solid particulates to the gas turbine engine.

The wash system of any preceding clause, further comprising a mixing chamber in fluid communication with the foam wash module and the particulate reservoir, the mixing chamber configured to mix the foamed wash fluid and the solid particulates to form a cleaning mixture.

The wash system of any preceding clause, wherein the mixing chamber is configured to mix a desired quantity of the solid particulates with the foamed wash fluid.

The wash system of any preceding clause, wherein a ratio of the solid particulates to the foamed wash fluid is greater than or equal to 0.1% by weight and less than or equal to 5% by weight.

The wash system of any preceding clause, further comprising a sensor in fluid communication with the mixing chamber for determining a ratio of the solid particulates to the foamed wash fluid, wherein the sensor is communicatively coupled to a controller configured to control a supply of the solid particulates from the particulate reservoir and the flow of the foamed wash fluid to the mixing chamber.

The wash system of any preceding clause, wherein the solid particulates comprises a first plurality of solid particles and a second plurality of solid particles, the second plurality of solid particles being different from the first plurality of solid particles.

The wash system of any preceding clause, wherein each of the first plurality of solid particles are surrounded by a gas and the second plurality of solid particles surround the gas.

The wash system of any preceding clause, wherein: the first plurality of solid particles are configured to abrasively clean one or more components of the gas turbine engine; and the second plurality of solid particles are configured to stabilize the foamed wash fluid.

The wash system of any preceding clause, wherein the one or more components of the gas turbine engine comprise the compressor section, the combustion section, and the turbine section.

The wash system of any preceding clause, wherein: the first plurality of solid particles comprise detergent, dry ice, or ice crystal; and the second plurality of solid particles comprise hydrophilic binders.

The wash system of any preceding clause, wherein the solid particulates comprise anionic detergents, nonionic detergents, solid solution polyisobutylene amine (PIBA), or a combination thereof.

The wash system of any preceding clause, wherein the wash fluid is a liquid comprising water and one or more additives, the one or more additives comprising corrosion inhibitors, surfactants, bis-tris, or a combination thereof.

The wash system of any preceding clause, wherein the at least one supply line supplies the mixture of the foamed wash fluid and a desired quantity of the solid particulates to the gas turbine engine.

The wash system of any preceding clause, wherein the mixture of the foamed wash fluid and the solid particulates comprises an aerosol.

The wash system of any preceding clause, wherein the at least one supply line is configured to supply the mixture of the foamed wash fluid and the solid particulates to the compressor section of the gas turbine engine.

The wash system of any preceding clause, wherein the at least one supply line is configured to supply the mixture of the foamed wash fluid and the solid particulates to the combustion section of the gas turbine engine.

The wash system of any preceding clause, wherein the at least one supply line is configured to supply the mixture of the foamed wash fluid and the solid particulates to the turbine section of the gas turbine engine.

The wash system of any preceding clause, further comprising a particulate delivery device in fluid communication with the particulate reservoir and configured to supply the solid particulates from the particulate reservoir to the at least one supply line.

A method for cleaning a gas turbine engine, the method comprising: coupling a wash system to at least one inlet of the gas turbine engine; aerating a flow of wash fluid to generate a flow of foamed wash fluid; mixing the flow of foamed wash fluid and a flow of solid particulates to create a flow of a cleaning mixture; and depositing the cleaning mixture on one or more components of the gas turbine engine.

The method of any preceding clause, further comprising rotating the one or more components of the gas turbine engine, wherein the rotating transmits kinetic energy to the solid particulates for abrasively cleaning surfaces of the one or more components of the gas turbine engine.

The method of any preceding clause, wherein the wash system comprises a plurality of supply lines, and wherein coupling the wash system to the at least one inlet of the gas turbine engine comprises coupling the plurality of supply lines to the at least one inlet of the gas turbine engine.

The method of any preceding clause, wherein the at least one inlet of the gas turbine engine is in fluid communication with one or more components of the gas turbine engine, the one or more components of the gas turbine engine comprising a compressor section, a combustion section, and a turbine section.

The method of any preceding clause, wherein the solid particulates comprises a first plurality of solid particles and a second plurality of solid particles, the second plurality of solid particles different from the first plurality of solid particles.

The method of any preceding clause, wherein each of the first plurality of solid particles are at least partially surrounded by a gas and the second plurality of solid particles surround the gas.

The method of any preceding clause, wherein: the first plurality of solid particles are configured to abrasively clean one or more components of the gas turbine engine; and the second plurality of solid particles are configured to stabilize the foamed wash fluid.

The method of any preceding clause, wherein: the first plurality of solid particles comprise detergent, dry ice, or ice crystal; and the second plurality of solid particles comprise hydrophilic binders.

The method of any preceding clause, wherein the mixing the flow of foamed wash fluid and the flow of solid particulates comprises mixing a desired quantity of the solid particulates with the foamed wash fluid.

The method of any preceding clause, wherein the method further comprises rinsing the cleaning mixture and debris from the gas turbine engine.

The method of any preceding clause, wherein the wash system comprises: a detergent reservoir for storing the wash fluid; a foam generating device in fluid communication with the detergent reservoir; a particulate reservoir for storing the solid particulates; and at least one fluid pathway for supplying the cleaning mixture to the gas turbine engine.

The method of any preceding clause, wherein the wash system further comprises a particulate delivery device in fluid communication with the particulate reservoir and configured to supply the solid particulates from the particulate reservoir to the at least one fluid pathway.

A wash assembly comprising: a gas turbine engine comprising a compressor section, a combustion section, and a turbine section defining at least in part a core gas flowpath, the gas turbine engine further defining an opening to the core gas flowpath; and a wash system comprising; a detergent reservoir comprising a wash fluid; a foam wash module in fluid communication with the detergent reservoir to generate a flow of foamed wash fluid; a particulate reservoir comprising solid particulates; a particulate delivery device in fluid communication with the particulate reservoir; and a supply assembly comprising at least one supply line, the supply assembly in fluid communication with the foam wash module, the particulate reservoir, and the opening of the gas turbine engine to supply a mixture of the foamed wash fluid and the solid particulates to the opening of the gas turbine engine; wherein the particulate delivery device is configured to supply the solid particulates from the particulate reservoir to the supply assembly.

The wash assembly of any preceding clause, further comprising: a mixing chamber in fluid communication with the foam wash module and the particulate reservoir, the mixing chamber configured to mix the foamed wash fluid and the solid particulates to form a cleaning mixture; a sensor in fluid communication with the mixing chamber for determining a ratio of the solid particulates to the foamed wash fluid; and a controller communicatively coupled to the sensor and configured to control a supply of the solid particulates from the particulate reservoir and the flow of the foamed wash fluid to the mixing chamber.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A wash system (300A, 300B, 300C) for washing a gas turbine engine (10), the gas turbine engine (10) comprising a compressor section (22, 24), a combustion section (26), and a turbine section (28, 30), the wash system (300A, 300B, 300C) comprising:
a detergent reservoir (365) for storing a wash fluid (372);
a foam wash module (315) in fluid communication with the detergent reservoir (365) to generate a flow of foamed wash fluid (376);
a particulate reservoir (370) for storing solid particulates (380); and
at least one supply line (378) fluidly coupled to the foam wash module (315) and the particulate reservoir (370) to supply a mixture of the foamed wash fluid (376) and the solid particulates (380) to the gas turbine engine (10).

2. The wash system (300A, 300B, 300C) of claim 1, further comprising a mixing chamber (390) in fluid communication with the foam wash module (315) and the particulate reservoir (370), the mixing chamber (390) configured to mix the foamed wash fluid (376) and the solid particulates (380) to form a cleaning mixture (382).

3. The wash system (300A, 300B, 300C) of claim 2, wherein:
the mixing chamber (390) is configured to mix a desired quantity of the solid particulates (380) with the foamed wash fluid (376); and
a ratio of the solid particulates (380) to the foamed wash fluid (376) is greater than or equal to 0.1% by weight and less than or equal to 5% by weight.

4. The wash system (300A, 300B, 300C) of any preceding claim, wherein the solid particulates (380) comprises a first plurality of solid particles (420) and a second plurality of solid particles (425), the second plurality of solid particles (425) being different from the first plurality of solid particles (420).

5. The wash system (300A, 300B, 300C) of claim 4, wherein each of the first plurality of solid particles (420) are surrounded by a gas and the second plurality of solid particles (425) surround the gas.

6. The wash system (300A, 300B, 300C) of claim 4 or 5, wherein:
the first plurality of solid particles (420) are configured to abrasively clean one or more components of the gas turbine engine (10); and
the second plurality of solid particles (425) are configured to stabilize the foamed wash fluid (376).

7. The wash system (300A, 300B, 300C) of any of claims 4 to 6, wherein:
the first plurality of solid particles (420) comprise detergent, dry ice, or ice crystal;
the second plurality of solid particles (425) comprise hydrophilic binders; and
the solid particulates (380) comprise anionic detergents, nonionic detergents, solid solution polyisobutylene amine (PIBA), or a combination thereof.

8. The wash system (300A, 300B, 300C) of any preceding claim, wherein the wash fluid (372) is a liquid comprising water and one or more additives, the one or more additives comprising corrosion inhibitors, surfactants, bis-tris, or a combination thereof.

9. The wash system (300A, 300B, 300C) of any preceding claim, wherein the mixture of the foamed wash fluid (376) and the solid particulates (380) comprises an aerosol.

10. A method for cleaning a gas turbine engine (10), the method comprising:
coupling a wash system (300A, 300B, 300C) to at least one inlet of the gas turbine engine (10);
aerating a flow of wash fluid (372) to generate a flow of foamed wash fluid (376);
mixing the flow of foamed wash fluid (376) and a flow of solid particulates (380) to create a flow of a cleaning mixture (382); and
depositing the cleaning mixture (382) on one or more components of the gas turbine engine (10).

11. The method of claim 10, further comprising rotating the one or more components of the gas turbine engine (10), wherein the rotating transmits kinetic energy to the solid particulates (380) for abrasively cleaning surfaces of the one or more components of the gas turbine engine (10).

12. The method of claim 10 or 11, wherein the solid particulates (380) comprises a first plurality of solid particles (420) and a second plurality of solid particles (425), the second plurality of solid particles (425) different from the first plurality of solid particles (420).

13. The method of claim 12, wherein:
the first plurality of solid particles (420) comprise detergent, dry ice, or ice crystal; and
the second plurality of solid particles (425) comprise hydrophilic binders.

14. The method of any of claims 10 to 13, wherein the mixing the flow of foamed wash fluid (376) and the flow of solid particulates (380) comprises mixing a desired quantity of the solid particulates (380) with the foamed wash fluid (376).

15. The method of any of claims 10 to 14, wherein the method further comprises rinsing the cleaning mixture (382) and debris from the gas turbine engine (10).
